# EUROPÄISCHE PATENTSCHRIFT

(11) **EP 0 327 997 B1**
(45) Veröffentlichungstag und Bekanntmachung des Hinweises auf die Patenterteilung: **30.06.1993**
(21) Anmeldenummer: 89101928.3
(22) Anmeldetag: 03.02.1989
(51) Int. Cl.: B60T 13/56

(54) **Pneumatischer Kraftverstärker in Tandembauweise, insbesondere für hydraulische Fahrzeug-Bremsanlagen**
Tandem arranged brake booster for hydraulic vehicle brake systems
Amplificateur pneumatique de force en tandem pour systèmes hydrauliques de freins de véhicules

(30) Priorität: 05.02.1988 DE 8801464 U; 05.02.1988 GB 8802598
(43) Veröffentlichungstag der Anmeldung: 16.08.1989
(73) Patentinhaber: LUCAS INDUSTRIES public limited company, Birmingham, B19 2XF West Midlands (GB)
(72) Erfinder: Kaub, Manfred, D-5401 Rhens (DE); Briggs, Stuart John, Cwnbarn Gwent NP 44 5EA (GB); Green, Stephen, Newport Gwent (GB)
(74) Vertreter: Goetz, Rupert, Dipl.-Ing.

(56) Entgegenhaltungen:
- DE-A- 1 576 060
- DE-A- 2 918 914
- DE-A- 2 942 024
- DE-A- 3 503 444
- FR-A- 1 505 226
- PATENT ABSTRACTS OF JAPAN vol. 8, no. 234 (M-334)(1671) 26 Oktober 1984,& JP-A-59 114151 (AISHIN SEIKI) 02 Juli 1984,

## Beschreibung

Die Erfindung betrifft einen pneumatischen Kraftverstärker in Tandembauweise, insbesondere für hydraulische Fahrzeug-Bremsanlagen, mit
- einem Verstärkergehäuse, das zwei Stirnwände und eine ortsfeste Zwischenwand aufweist,
- zwei beweglichen Innenwänden, die das Innere des Verstärkergehäuses beiderseits der ortsfesten Zwischenwand in je zwei Kammern unterteilen, welche an Quellen unterschiedlichen Druckes anschließbar sind,
- Strömungsverbindungen zwischen je zwei Kammern, die durch eine weitere der Kammern voneinander getrennt sind,
- Verbindungsstangen, die sich von einer Stirnwand durch die Zwischenwand und die beiden Innenwände hindurch zur anderen Stirnwand erstrecken, und
- schlauchartigen Bälgen, die rings um die Verbindungsstangen angeordnet und Bestandteile mindestens einer der Strömungsverbindungen sind.

Bei einem bekannten Kraftverstärker dieser Gattung (GB 2070173 B) ist die, bezogen auf die Fahrtrichtung des zugehörigen Fahrzeugs, vordere Innenwand mit der vorderen Stirnwand durch zwei Faltenbälge verbunden, durch die sich je eine massive Verbindungsstange hindurcherstreckt. Diese Faltenbälge haben nur die Aufgabe, die im Betrieb erforderliche Trennung zwischen den beiderseits der vorderen Innenwand angeordneten Kammern aufrechtzuerhalten. In entsprechender Weise ist die hintere Innenwand mit der Zwischenwand durch ein Paar Faltenbälge verbunden, durch die sich ebenfalls je eine der Verbindungsstangen hindurcherstreckt. Diese hinteren Faltenbälge haben neben der Aufgabe, die Kammern beiderseits der hinteren Innenwand voneinander zu trennen, die weitere Aufgabe, eine ständige Strömungsverbindung zwischen der hinter der hinteren Innenwand angeordneten Kammer und der hinter der vorderen Innenwand, jedoch vor der ortsfesten Zwischenwand, angeordneten Kammer herzustellen. Eine weitere Strömungsverbindung besteht zwischen den beiden Kammern, die unmittelbar vor je einer der beiden beweglichen Innenwände angeordnet sind; diese weitere Strömungsverbindung wird durch ein zentrales Rohr hergestellt, das gemeinsam mit den beiden Innenwänden axial beweglich und gegen die ortsfeste Zwischenwand durch eine Gleitringdichtung abgedichtet ist.

Bei diesem bekannten Bremskraftverstärker muß der axiale Abstand der hinteren Innenwand von der ortsfesten Zwischenwand ebenso wie der axiale Abstand der vorderen Innenwand von der vorderen Stirnwand erheblich größer als der größte erforderliche Weg der Innenwände sein, da die Faltenbälge in der vorderen Endstellung der Innenwände Faltenpakete bilden, die noch erheblichen Platz in axialer Richtung benötigen und nicht zu stark zusammengedrückt werden dürfen, um nicht beschädigt zu werden.

Bei einem anderen bekannten Kraftverstärker in Tandembauweise (GB 2034429 A) sind zwischen zwei Stirnwänden durchgehende Verbindungsrohre angeordnet, an deren Enden je ein durch die zugehörige Stirnwand hindurch nach außen ragender Gewindebolzen befestigt ist. Eines dieser Verbindungsrohre ist innerhalb zweier Kammern, die unmittelbar vor je einer beweglichen Innenwand liegen, mit Querbohrungen versehen, so daß das Rohr eine ständige Strömungsverbindung zwischen diesen beiden Kammern bildet. In entsprechender Weise ist ein weiteres Verbindungsrohr innerhalb zweier Kammern, die unmittelbar hinter je einer der beiden beweglichen Innenwände liegen, mit Querbohrungen versehen, so daß auch zwischen diesen beiden Kammern eine ständige Strömungsverbindung besteht. Von der vorderen Innenwand aus erstreckt sich rings um jedes der Verbindungsrohre ein Rollbalg, der ungefähr auf halbem Weg zur vorderen Stirnwand endet und dort am zugehörigen Verbindungsrohr unverschiebbar befestigt ist. In entsprechender Weise erstreckt sich von der hinteren Innenwand rings um jedes Verbindungsrohr ein Rollbalg, der ungefähr auf halbem Weg zur ortsfesten Zwischenwand endet und dort am zugehörigen Verbindungsrohr unverschiebbar befestigt ist.

Die bei Betätigung dieses bekannten Bremskraftverstärkers stattfindenden Vorwärtsbewegungen der beiden Innenwände bewirken, daß die Rollbälge mehr oder weniger weit umgestülpt werden und infolgedessen kein Faltenpaket bilden, auf dessen Platzbedarf Rücksicht genommen werden müßte. Dieser Bremskraftverstärker läßt sich deshalb kürzer bauen als der an erster Stelle beschriebene bekannte Bremskraftverstärker. Die beiden aus je einem Verbindungsrohr und je zwei Gewindebolzen bestehenden Baugruppen, welche die beiden Stirnwände miteinander verbinden und in einem bestimmten Abstand voneinander halten, sind allerdings sehr viel aufwendiger als die massiven Verbindungsstangen bei dem an erster Stelle beschriebenen Kraftverstärker. Aufwendig ist einerseits die gesonderte Herstellung und anschließende Befestigung der beiden Gewindebolzen am Verbindungsrohr und andererseits die Herstellung der Querbohrungen, deren Ränder sehr sorgfältig abgerundet werden müssen, damit sie die Rollbälge nicht beschädigen können.

Der Erfindung liegt deshalb die Aufgabe zugrunde, einen pneumatischen Kraftverstärker in Tandembauweise derart zu gestalten, daß die erforderlichen Strömungsverbindungen zwischen zusammengehörigen Kammern geringen Bauaufwand und geringen Platzbedarf in axialer Richtung erfordern.

Die Aufgabe ist erfindungsgemäß mit einem Kraftverstärker der eingangs beschriebenen Gattung gelöst, bei dem mindestens eine der Verbindungsstangen sich durch ein Rohrstück hindurcherstreckt, das mit der Zwischenwand dicht verbunden ist, von dort in Richtung zu einer der Stirnwände wegragt, vor dieser endet und mit der beweglichen Innenwand, die dieser Stirnwand benachbart ist, durch einen schlauchartigen Balg abdichtend verbunden ist, mit dem zusammen das Rohrstück eine der Strömungsverbindungen bildet.

Der als Strömungsverbindung dienende, eine Verbindungsstange ringförmig umgebende Zwischenraum zwischen zwei in bezug zueinander beweglichen Wänden ist also erfindungsgemäß durch die Aneinandereihung eines schlauchartigen Balges und eines Rohrstücks gebildet. Damit wird erreicht, daß der schlauchartige Balg entsprechend kürzer bemessen sein und im Betrieb bei größeren Bewegungen der ihm zugeordneten beweglichen Wand umgestülpt werden kann. Die erfindungsgemäße Anordnung eines Rohrstücks und einer sich durch dieses hindurcherstreckenden Verbindungsstange ist erheblich einfacher herstellbar als die bekannte Anordnung mit einem Rohr, das sich von einer Stirnwand bis zur anderen erstreckt, an seinen beiden Enden je einen Gewindebolzen trägt und dazwischen mit Querbohrungen versehen ist. Das erfindungsgemäße Rohrstück kann völlig glatt sein, so daß es den zugehörigen Balg nicht beschädigen kann.

Bei einer bevorzugten Ausführungsform der Erfindung ist das Rohrstück mit der ortsfesten Zwischenwand einstückig ausgebildet. Wenn die Zwischenwand beispielsweise aus Blech besteht, kann das bzw. jedes an ihr ausgebildete Rohrstück durch Tiefziehen hergestellt sein Rohrstück und Zwischenwand können aber auch ein einstückiges Spritzteil aus Kunststoff sein.

Bei einer zweckmäßigen Ausgestaltung der Erfindung endet das Rohrstück ungefähr auf halbem Weg zur Ruhestellung der beweglichen Innenwand, die in ihrer Ruhestellung am weitesten von der Zwischenwand entfernt ist.

Eine Alternative dazu besteht darin, daß das Rohrstück sich durch die bewegliche Innenwand hindurcherstreckt, die in ihrer Ruhestellung der Zwischenwand am nächsten ist, wobei das Rohrstück ungefähr auf halbem Weg von dieser Innenwand zur benachbarten Stirwand endet.

Ein Ausführungsbeispiel der Erfindung wird im folgenden anhand schematischer Zeichnungen mit weiteren Einzelheiten erläutert. Es zeigt:
- Fig. 1: einen Axialschnitt durch eine Betätigungsvorrichtung einer Fahrzeug-Bremsanlage und
- Fig. 2: einen Axialschnitt eines gegenüber Fig. 1 abgewandelten pneumatischen Kraftverstärkers.

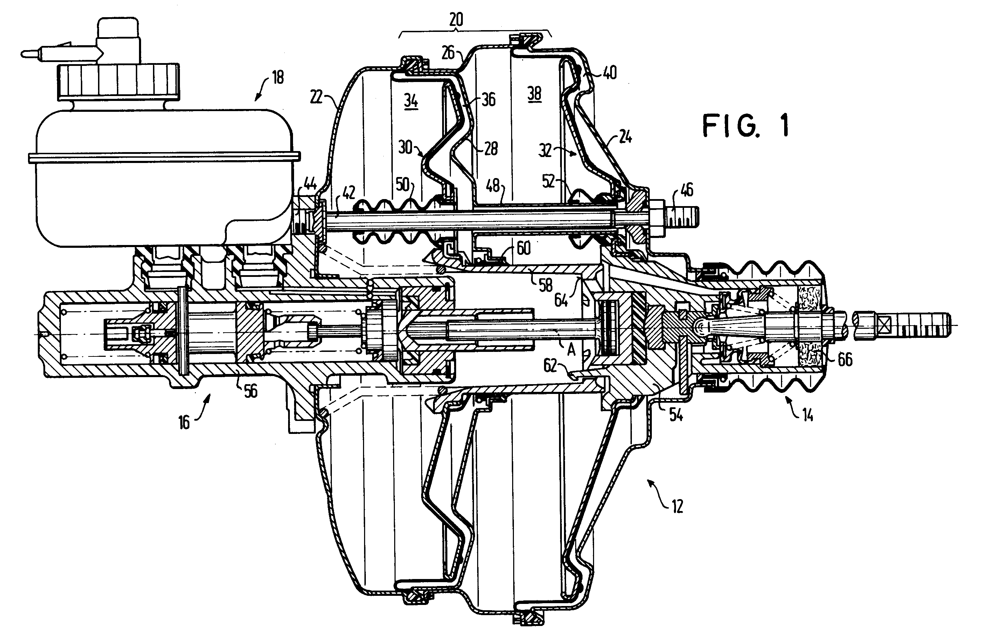

Die in Fig. 1 dargestellte Betätigungsvorrichtung ist für eine hydraulische Zweikreis-Bremsanlage vorgesehen und besteht im wesentlichen aus einem pneumatischen Kraftverstärker 12, einem Steuerventil 14 für diesen, einem hydraulischen Hauptbremszylinder 16 und einem auf diesen aufgesteckten Vorratsbehälter 18 für Bremsflüssigkeit.

Der Kraftverstärker 12 hat ein Verstärkergehäuse 20, das aus einer vorderen Stirnwand 22, einer hinteren Stirnwand 24, einem Mantel 26 und einer Zwischenwand 28 zusammengesetzt ist. Im dargestellten Beispiel sind alle genannten Gehäuseteile Blechpreßteile. Die Innenräume zwischen der vorderen Stirnwand 22 und der Zwischenwand 28 einerseits sowie zwischen dieser und der hinteren Stirnwand 24 andererseits sind durch je eine bewegliche Innenwand 30 bzw. 32 in eine vordere Vakuumkammer 34 und eine vordere Luftkammer 36 bzw. in eine hintere Vakuumkammer 38 und eine hintere Luftkammer 40 unterteilt.

Die hier verwendeten Bezeichnungen "vorne" und "hinten" entsprechen der üblichen Anordnung des Kraftverstärkers 12 im Motorraum eines Kraftfahrzeugs; diese Anordnung ist jedoch nicht zwingend. Vor allem, wenn der Kraftverstärker 12 mit dem Steuerventil 14 und dem Hauptbremszylinder 16 nicht zu einer Baugruppe vereinigt, sondern getrennt angeordnet ist, kann der Kraftverstärker 12 eine beliebige Lage im zugehörigen Fahrzeug einnehmen. Eine solche getrennte Anordnung ist Gegenstand des deutschen Gebrauchsmusters 8801182.

Die beiden Stirnwände 22 und 24 sind miteinander durch ein Paar Verbindungsstangen 42 verbunden, die sich parallel zur Achse A des Kraftverstärkers 12 durch die vordere Innenwand 30, die Zwischenwand 28 und die hintere Innenwand 32 hindurcherstrecken. Die beiden Verbindungsstangen 42 liegen in einer gemeinsamen, die Achse A enthaltenden Ebene; zugunsten der Übersichtlichkeit der Darstellung ist in Fig. 1 nur eine Verbindungsstange 42 dargestellt. Auf diese Verbindungsstange 42 und die ihr zugeordneten Bauteile wird im folgenden näher eingegangen; für die andere Verbindungsstange 42 gilt Entsprechendes.

Die Verbindungsstange 42 hat ein vorderes Endstück 44, das an der vorderen Stirnwand 22 dicht befestigt ist, nach vorne aus dieser herausragt und zur Befestigung des Hauptbremszylinders 16 dient, sowie ein hinteres Endstück 46, das an der hinteren Stirnwand 24 befestigt ist, nach hinten aus dieser herausragt und dazu dient, die gesamte, aus Kraftverstärker 12, Steuerventil 14, Hauptbremszylinder 16 und Vorratsbehälter 18 bestehende Baugruppe an einem Karosserieteil, beispielsweise einer Spritzwand, eines Kraftfahrzeugs zu befestigen.

Von der Zwischenwand 28 erstreckt sich gemäß Fig. 1 ein Rohrstück 48 nach hinten, das einen Abschnitt der gezeichneten Verbindungsstange 42 mit einem radialen Zwischenraum umschließt und mindestens bis zur Mitte zwischen der Zwischenwand 28 und der hinteren Innenwand 32 endet, die in der Zeichnung ihre Ruhestellung einnimmt. Das Rohrstück 48 kann, wie dargestellt, in einem Stück aus Blech mit der Zwischenwand 28 tiefgezogen sein. Gemäß Fig. 1 erstreckt sich das Rohrstück 48 im wesentlichen durch die hintere Innenwand 32 hindurch und endet kurz vor der hinteren Stirnwand 24.

Die Verbindungsstange 42 ist von einem vorderen Balg 50 und einem hinteren Balg 52 umschlossen. Beide Balge 50 und 52 können, wie dargestellt, Faltenbälge sein. Der vordere Balg 50 ist mit seinem hinteren Ende an der vorderen Innenwand 30 befestigt; in entsprechender Weise ist der hintere Balg 52 mit seinem hinteren Ende an der hinteren Innenwand 32 dicht befestigt. Der vordere Balg 50 ist mit seinem vorderen Ende unmittelbar auf der Verbindungsstange 42 abdichtend und dennoch verschiebbar geführt. Dadurch grenzt er gemeinsam mit der vorderen Innenwand 30 die vordere Vakuumkammer 34 gegen die vordere Luftkammer 36 ab. Der hintere Balg 52 ist mit seinem vorderen Ende auf dem Rohrstück 48 abdichtend und dennoch verschiebbar geführt und dient somit der Abgrenzung der hinteren Vakuumkammer 38 von der hinteren Luftkammer 40.

Das Steuerventil 14 ist von üblicher Bauart und hat im dargestellten Beispiel ein gleichachsig mit dem Kraftverstärker 12 teilweise innerhalb des Verstärkergehäuses 20 angeordnetes Ventilgehäuse 54. Der hintere Teil des Ventilgehäuses 54 ragt nach hinten aus dem Verstärkergehäuse 20 heraus. In entsprechender Weise hat der Hauptbremszylindler 16 ein Zylindergehäuse 56, das gleichachsig mit dem Kraftverstärker 12 teilweise innerhalb des Verstärkergehäuses 20 angeordnet ist und aus diesem nach vorne herausragt. Das Ventilgehäuse 54 ist axial verschiebbar, während des Zylindergehäuse 56 an das Verstärkergehäuse 20 fest angeschraubt ist.

Zwischen dem Ventilgehäuse 54 und dem Zylindergehäuse 56 ist, vollständig innerhalb des Vestärkergehäuses 20, eine rohrförmige Nabe 58 angeordnet, die mit einem geringen Axialspiel gegenüber dem Ventilgehäuse 54 gemeinsam mit diesem in axialer Richtung verschiebbar ist. Die ortsfeste Zwischenwand 28 ist gegen die Nabe 58 durch eine Gleitringdichtung 60 abgedichtet. Die vordere Innenwand 30 ist am vorderen Ende der Nabe 58 dicht befestigt, während die hintere Innenwand 32 am Ventilgehäuse 54 dicht befestigt ist. Das Ventilgehäuse 54 hat hakenförmige, ungefähr achsparallele Vorsprünge 62, die hinter einer Innenschulter 64 der Nabe 58 eingerastet sind.

Die beschriebene Anordnung und Abdichtung der einzelnen Wände bewirkt, daß eine Strömungsverbindung zwischen der hinteren Vakuumkammer 38 und der hinteren Luftkammer 40 nur über das Steuerventil 14 herstellbar ist. Die vordere Vakuumkammer 34 ist mit der hinteren Vakuumkammer 38 - und nur mit dieser - ständig durch die rohrförmige Nabe 58 hindurch verbunden. die vordere Luftkammer 36 ist mit der hinteren Luftkammer 40 - und nur mit dieser - ständig durch das Rohrstück 48 und den Balg 52 verbunden.

Eine der beiden Vakuumkammern 34 und 38 ist ständig mit einer Vakuumquelle verbunden, beispielsweise mit der Ansaugleitung eines Verbrennungsmotors. Die hintere Luftkammer 40 läßt sich durch Betätigen des Steuerventils 14 über einen Filter 66 mit der äußeren Umgebung verbinden. Das Steuerventil 14 sperrt in seiner Ruhestellung diese Verbindung, verbindet jedoch die hintere Luftkammer 40 mit der hinteren Vakuumkammer 38. Infolgedessen ist das Vakuum in sämtlichen Kammern 34, 36, 38 und 40 wirksam, solange das Steuerventil 14 unbetätigt ist. Bei Betätigung des Steuerventils 14 gelangt Umgebungsluft in die hintere Luftkammer 40 und von dort auch in die vordere Luftkammer 36; die Verbindung der hinteren Luftkammer 40 mit der hinteren Vakuumkammer 38 ist unterbrochen, so daß in keine der Vakuumkammern 34 und 38 Umgebungsluft einströmen kann.

Von einer näheren Beschreibung des Steuerventils 14, des Hauptbremszylinders 16 und des Vorratsbehälters 18 kann abgesehen werden, da diese sämtlich von bekannter Bauart sind.

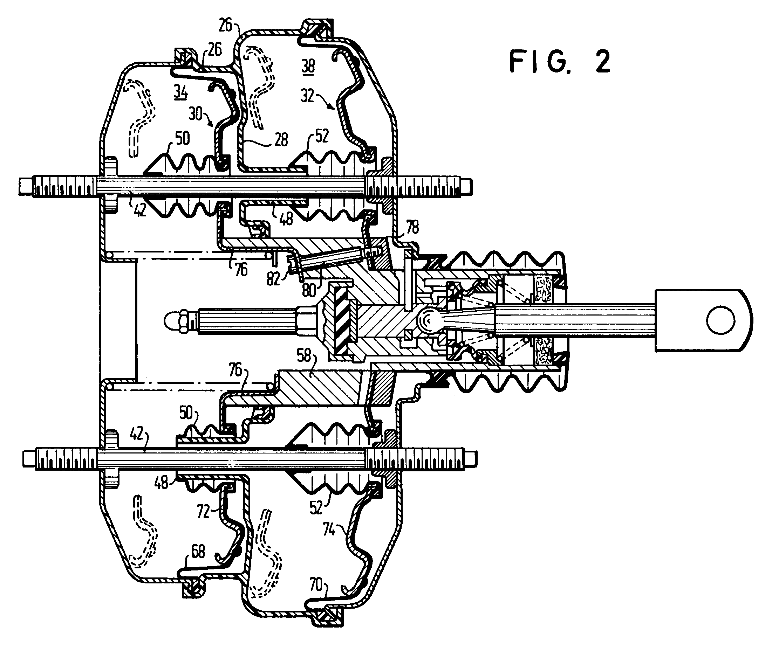

Bei dem in Fig. 2 dargestellten Bremskraftverstärker ist die Zwischenwand 28 mit dem Mantel 26 des Verstärkergehäuses einstückig als Kunststoff-Spritzteil hergestellt. Eine der beiden Verbindungsstangen 42, die in der oberen Hälfte der Fig. 2 dargestellt ist, erstreckt sich wie in Fig. 1 durch ein Rohrstück 48, das von der Zwischenwand 28 nach hinten ragt. Dieses Rohrstück 48 endet ungefähr auf halbem Weg von der Zwischenwand 28 zur hinteren beweglichen Innenwand 32, wenn diese ihre in Fig. 2 abgebildet Ruhestellung einnimmt. Das vordere Ende des zugehörigen Balges 52 ist am hinteren Ende des Rohrstücks 48 befestigt. Der Balg 52 ist so bemessen, daß er über das Rohrstück 48 umgestülpt wird, wenn die hintere Innenwand 32 sich bei einer Bremsbetätigung ihrer vorderen Endstellung nähert, die in Fig. 2 mit gestrichelten Linien angedeutet ist. Der Zweck des Rohrstücks 48 und des Balges 52 in der oberen Hälfte der Fig. 2 ist der gleiche wie in Fig. 1, nämlich eine gegen die hintere Vakuumkammer 38 abgedichtete, ständige Strömungsverbindung zwischen den beiden Luftkammern 36 und 40 herzustellen.

Die zweite, in der unteren Hälfte der Fig. 2 dargestellte Verbindungsstange 42 ist ebenfalls mit radialem Zwischenraum durch ein Rohrstück 48 hindurchgeführt; dieses erstreckt sich jedoch von der Zwischenwand 28 nach vorne und endet auf halbem Weg von der Zwischenwand 28 zur vorderen Stirnwand 22. Am vorderen Ende dieses Rohrstücks 48 ist das vordere Ende eines Balges 50 befestigt, der wie ist Balge 50 in Fig. 1 und in der oberen Hälfte der Fig. 2 die Aufgabe hat, die vordere Vakuumkammer 34 von der vorderen Luftkammer 36 zu trennen. Das nach vorne ragende Rohrstück 48 bildet eine ständige Strömungsverbindung zwischen den beiden Vakuumkammern 34 und 38.

Die beiden Rohrstücke 48, von denen gemäß Fig. 2 eines nach hinten und das andere nach vorne ragt, sind mit der Zwischenwand 28 in einem Stück aus Kunststoff gespritzt und haben zusammen eine Länge, die mit derjenigen des Mantels 26 ungefähr übereinstimmt.

Bei der in Fig. 2 dargestellten Ausführungsform ist es nicht erforderlich, daß eine Strömungsverbindung zwischen den beiden Vakuumkammern 34 und 38, wie in Fig. 1 dargestellt, durch die rohrförmige Nabe 58 gebildet wird. Der Raum innerhalb der Nabe 58 kann deshalb vollständig für einen Hauptbremszylinder genutzt werden, der wie in Fig. 1 von üblicher Bauart sein kann und deshalb in Fig. 2 nicht noch einmal dargestellt ist. Der axiale Abstand zwischen Steuerventil 14 und Hauptbremszylinder 16 kann auf ein Minimum reduziert werden.

Das beschriebene Zusammenwirken mindestens eines der Faltenbalge 50 oder 52 mit einem Rohrstück 48, das die zugehörige Verbindungsstange 42 mit radialem Abstand umschließt und deshalb einen ausreichend großen Durchmesser haben muß, macht es erforderlich, Faltenbalge zu verwenden, die ihrerseits einen verhältnismäßig großen Durchmesser haben. Dadurch kann der verfügbare Bauraum für die erforderliche dichte Befestigung der beweglichen Innenwände 30 und 32 an der Nabe 58 knapp werden.

Eine weitere in Fig. 2 dargestellte Besonderheit besteht deshalb in der Befestigung der radial inneren Ränder der ringförmigen Innenwände 30 und 32 an der Nabe 58, die gemäß Fig. 2 mit dem axial beweglichen Ventilgehäuse 54 aus einem Stück besteht. Die beiden Innenwände 30 und 32 sind, wie üblich, im wesentlichen aus je einer ringförmigen elastischen Membran 68 bzw. 70 und je einer ringförmigen starren Stützplattle 72 bzw. 74 zusammengesetzt. Am radial inneren Rand der Stützplatte 72 sind Finger 76 ausgebildet, die sich innerhalb der rohrförmigen Nabe 58 im wesentlichen achsparallel nach hinten erstrecken. Am radial inneren Rand der Stützplatte 74 ist ein Verstärkungsring 78 befestigt. Jeder der Finger 76 ist mit dem Verstärkungsring 78 durch eine Schraube 80 verbunden, die sich abgedichtet durch die Nabe 58 hindurcherstreckt.

Gemäß Fig. 2 hat der Verstärkungsring 78 für jede der Schrauben 80 ein Muttergewinde, und die Finger 76 sind durch je einen Schraubenkopf 82 festgehalten. Die Anordnung kann aber auch umgekehrt sein; die Schrauben 80 können also von hinten nach vorne eingeschraubt sein. Wesentlich ist, daß die radial inneren Ränder der beweglichen Innenwände 30 und 32 durch gemeinsame Befestigungsmittel, und somit auf besonders einfache und platzsparende Weise, an der Nabe 58 befestigt sind.

Durch diese gemeinsame Befestigung ist der radial innere Rand der Membran 68 dicht an einer schmalen ringförmigen vorderen Stirnfläche der Nabe 58 anliegend gehalten. Der radial innere Rand der Membran 70 ist zwischen dem Verstärkungsring 78 und dem radial inneren Rand der Stützplattle 74 eingespannt und auf diese Weise an einer ringförmigen hinteren Stirnfläche dere Nabe 58 dicht befestigt.

## Patentansprüche

1. Pneumatischer Kraftverstärker in Tandembauweise, insbesondere für hydraulische Fahrzeug-Bremsanlagen, mit
- einem Verstärkergehäuse (20), das zwei Stirnwände (22, 24) und eine ortsfeste Zwischenwand (28) aufweist,
- zwei beweglichen Innenwänden (30, 32), die das Innere des Verstärkergehäuses (20) beiderseits der ortsfesten Zwischenwand (28) in je zwei Kammern (34, 36 bzw. 38, 40) unterteilen, welche an Quellen unterschiedlichen Druckes anschließbar sind,
- Strömungsverbindungen zwischen je zwei Kammern (34, 38 und 36, 40), die durch eine weitere der Kammern (36 bzw. 38) voneinander getrennt sind,
- Verbindungsstangen (42), die sich von einer Stirnwand (22) durch die Zwischenwand (28) und die beiden Innenwände (30, 32) hindurch zur anderen Stirnwand (24) erstrecken, und
- schlauchartigen Bälgen (50, 52), die rings um die Verbindungsstangen (42) angeordnet und Bestandteile mindestens einer der Strömungsverbindungen sind,
dadurch **gekennzeichnet,** daß mindestens eine der Verbindungsstangen (42) sich durch ein Rohrstück (48) hindurcherstreckt, das mit der Zwischenwand (28) dicht verbunden ist, von dort in Richtung zu einer der Stirnwände (22, 24) wegragt, vor dieser endet und mit der beweglichen Innenwand (30, 32) die dieser Stirnwand (22 bzw. 24) benachbart ist, durch einen Balg (50 bzw. 52) abdichtend verbunden ist, mit dem zusammen das Rohrstück (48) eine der Strömungsverbindungen bildet.

2. Kraftverstärker nach Anspruch 1,
dadurch **gekennzeichnet,** daß das Rohrstück (48) an der ortsfesten Zwischenwand (28) einstückig ausgebildet ist.

3. Kraftverstärker nach Anspruch 1 oder 2,
dadurch **gekennzeichnet,** daß der Balg (52) als Faltenbalg ausgebildet und mit einem Ende auf dem Rohrstück (48) verschiebbar geführt ist.

4. Kraftverstärker nach Anspruch 1 oder 2,
dadurch **gekennzeichnet,** daß der Balg (52) als Rollbalg ausgebildet und mit einem Ende an dem Rohrstück (48) befestigt ist.

5. Kraftverstärker nach einem der Ansprüche 1 bis 4,
dadurch **gekennzeichnet,** daß das Rohrstück (48) ungefähr auf halbem Weg zur Ruhestellung der beweglichen Innenwand (32) endet, die in ihrer Ruhestellung am weitesten von der Zwischenwand (28) entfernt ist.

6. Kraftverstärker nach einem der Ansprüche 1 bis 4,
dadurch **gekennzeichnet,** daß das Rohrstück (48) sich durch die bewegliche Innenwand (30) hindurcherstreckt, die in ihrer Ruhestellung der Zwischenwand (28) am nächsten ist, wobei das Rohrstück (48) ungefähr auf halbem Weg von dieser Innenwand (30) zur benachbarten Stirnwand (22) endet.

7. Kraftverstärker nach einem der Ansprüche 1 bis 6 mit einer axial verschiebbaren, rohrförmigen Nabe (58), an der die beiden beweglichen Innenwände (30, 32) dicht befestigt sind, und gegen deren Außenseite die ortsfeste Zwischenwand (28) abgedichtet ist,
dadurch **gekennzeichnet,** daß die beiden beweglichen Innenwände (30, 32) durch innerhalb der Nabe (58) angeordnete Befestigungsmittel (76, 80) an dieser befestigt sind.

8. Kraftverstärker nach anspruch 7,
dadurch **gekennzeichnet,** daß eine der beweglichen Innenwände (30) eine erste ringförmige Stützplatte (72) aufweist, von deren radial innerem Rand sich Finger (76) im wesentlichen achsparallel in die Nabe (58) erstrecken, und die andere bewegliche Innenwand (32) eine zweite ringförmige Stützplatte (74) aufweist, an deren radial innerem Rand die Finger (76) befestigt sind.

9. Kraftverstärker nach Anspruch 8,
dadurch **gekennzeichnet,** daß die Finger (76) der ersten Stützplatte (72) durch Schrauben (80) am radial inneren Rand der zweiten Stützplatte (74) befestigt sind.

10. Kraftverstärker nach Anspruch 9,
dadurch **gekennzeichnet,** daß die beiden beweglichen Innenwände (30, 32) je eine ringförmige elastische Membran (68, 70) aufweisen, deren radial innere Ränder durch die in axialer Richtung durch die Nabe (58) hindurch zusammengespannten Stützplatten (72, 74) an je einer ringförmigen Stirnfläche der Nabe (58) dicht befestigt sind.

## Claims

1. Tandem arranged pneumatic brake booster, in particular for hydraulic vehicle brake systems, comprising
- a booster housing (20) having two end walls (22, 24) and a stationary intermediate wall (28),
- two movable inner walls (30, 32) which divide the interior of the booster housing (20) on both sides of the stationary intermediate wall (28) in each case into two respective chambers (34, 36; 38, 40) which are connectable to sources of different pressure,
- flow connections between in each case two chambers (34, 38; 36, 40) which are separated from each other by another one of the chambers (36 or 38),
- connecting rods (42) which extend from one end wall (22) through the intermediate wall (28) and the two inner walls (30, 32) To the other end wall (24) and
- hose-like bellows (50, 52) which are arranged around the connecting rods (42) and are components of at least one of the flow connections,
characterized in that
at least one of the connecting rods (42) extends through a tube section (48) which is sealingly connected to the intermediate wall (28), projects from there in the direction towards one of the end walls (22, 24), terminates in front of the latter and is sealingly connected to the movable inner wall (30, 32) adjacent said end wall (22 or 24) by a hose-like bellows (50, 52), together with which the tube section (48) forms one of the flow connections.

2. Brake booster according to claim 1,
characterized in that the tube section (48) is integrally formed on the stationary intermediate wall (28).

3. Brake booster according to claim 1 or 2,
characterized in that the bellows (52) is constructed as folding bellows and is displaceably guided with one end on the tube section (48).

4. Brake booster according to claim 1 or 2,
characterized in that the bellows (52) is constructed as rolling bellows and is secured with one end to the tube section (48).

5. Brake booster according to any one of claims 1 to 4,
characterized in that the tube section (48) terminates approximately halfway along towards the rest position of the movable inner wall (32) which in its rest position is furthest remote from the intermediate wall (28).

6. Brake booster according to any one of claims 1 to 4,
characterized in that the tube section (48) extends through the movable inner wall (30) which in its rest position is closest to the intermediate wall (28), the tube section (48) terminating approximately halfway between said inner wall (30) and the adjacent end wall (22).

7. Brake booster according to any one of claims 1 to 6, comprising an axially displaceable tubular hub (58) to which the two movable inner walls (30, 32) are sealingly secured and with respect to the outside of which the stationary intermediate wall (28) is sealed,
characterized in that the two movable inner walls (30, 32) are secured to the hub (58) by securing means (76, 80) arranged within the latter.

8. Brake booster according to claim 7,
characterized in that one of the movable inner walls (30) comprises a first annular support plate (72), from the radially inner edge of which fingers (76) extend substantially parallel into the hub (58), and the other movable wall (32) comprises a second annular support plate (74) to the radial inner edge of which the fingers (76) are secured.

9. Brake booster according to claim 8,
characterized in that the fingers (76) of the first support plate (72) are secured by screws (80) to the radially inner edge of the second support plate (74).

10. Brake booster according to claim 9,
characterized in that the two movable inner walls (30, 32) each comprise an annular resilient diaphragm (68, 70) the radial inner edges of which are sealingly secured to a respective annular end face of the hub (58) by the support plates (72, 74) clamped together in the axial direction through the hub (58).

## Revendications

1. Amplificateur pneumatique de force, en mode tandem, en particulier pour installations hydrauliques de frein de véhicule, comportant
- un carter d'amplificateur (20) qui présente deux parois frontales (20, 24) et une paroi intermédiaire fixe (28),
- deux parois intérieures mobiles (30, 32), qui divisent l'intérieur du carter d'amplificateur (20), des deux côtés de la paroi intermédiaire fixe (28), en, chaque fois, deux chambres (34, 36 ou 38, 40) qui peuvent être reliées à des sources de pression différentes,
- des liaisons fluidiques entre chaque fois deux chambres (34, 38 et 36, 40) qui sont séparées l'une de l'autre par une autre des chambres (36 ou 38),
- des tiges de liaison (32) qui, depuis une paroi frontale (22), s'étendent à travers la paroi intermédiaire (28) et à travers les deux parois intérieures (30, 32), jusqu'à l'autre paroi frontale (24), et
- des soufflets (50, 52), du type tube souple, qui sont disposés autour des tiges de liaison (42) et sont des constituants d'au moins l'une des liaisons fluidiques, amplificateur caractérisé par le fait qu'au moins l'une des tiges de liaison (42) s'étend à travers un élément tubulaire (48) relié, de façon étanche, avec la paroi intermédiaire (28), puis, de là, part en direction de l'une des parois frontales (22, 24), se termine avant celle-ci et est reliée, de façon étanche, avec la paroi intérieure mobile (30, 32), voisine de cette paroi frontale (22, ou 24), par un soufflet (50 ou 52) avec lequel l'élément tubulaire (48) forme l'une des liaisons fluidiques.

2. Amplificateur de force selon la revendication 1,
caractérisé par le fait que l'élément tubulaire (48) est formé, solidairement, sur la paroi intérieure fixe (28).

3. Amplificateur de force selon la revendication 1 ou 2,
caractérisé par le fait que le soufflet (52) est conçu comme soufflet accordéon et que par l'une de ses extrémités il peut coulisser sur l'élément supérieur (48).

4. Amplificateur de force selon la revendication 1 ou 2,
caractérisé par le fait que le soufflet (52) est conçu comme soufflet déroulant et que par l'une de ses extrémités il est fixé à l'élément tubulaire (48).

5. Amplificateur de force selon l'une des revendications 1 à 4,
caractérisé par le fait que l'élément tubulaire (48) se termine à peu près à mi-chemin de la position de repos de la paroi intérieure mobile (32) qui, dans sa position de repos, est la plus éloignée de la paroi intermédiaire (28).

6. Amplificateur de force selon l'une des revendications 1 à 4,
caractérisé par le fait que l'élément tubulaire (48) s'étend à travers la paroi intérieure mobile (30) qui, dans sa position de repos, est la plus proche de la paroi intermédiaire (28), l'élément tubulaire (48) se terminant à peu près au milieu du chemin de cette paroi intermédiaire (30) en direction de la paroi frontale voisine (22).

7. Amplificateur de force selon l'une des revendications 1 à 6, comportant un moyeu tubulaire (58) qui peut coulisser axialement, auquel les deux parois intérieures mobiles (30, 32) sont fixées de façon étanche et à l'égard de la face extérieure duquel la paroi intermédiaire fixe (28) est rendue étanche,
amplificateur caractérisé par le fait que les deux parois intérieures mobiles (30, 32) sont fixées au moyeu (58) par des moyens de fixation (76, 80) disposés à l'intérieur de ce moyeu (58).

8. Amplificateur de force selon la revendication 7,
caractérisé par le fait que l'une des parois intérieures mobiles (30) présente une première plaque d'appui annulaire (72) du bord radialement intérieur de laquelle des doigts (76) s'étendent dans le moyeu (58), sensiblement parallèlement à l'axe, et par le fait que l'autre paroi intérieure mobile (32) présente une seconde plaque d'appui annulaire (74) au bord radialement intérieur de laquelle les doigts (76) sont fixés.

9. Amplificateur de force selon la revendication 8,
caractérisé par le fait que les doigts (76) de la première plaque d'appui (76) sont fixés, par des vis (80), au bord radialement intérieur de la seconde plaque d'appui (74).

10. Amplificateur de force selon la revendication 9,
caractérisé par le fait que les deux parois intérieures mobiles (30, 32) présentent chacune une membrane élastique annulaire (68, 70) dont les bords radialement intérieurs sont, par l'intermédiaire des plaques d'appui (72, 74) bridées ensemble en direction axiale par le moyeu (58), fixées de façon étanche à, chacune, une surface frontale annulaire du moyeu (58).
